Europäisches Patentamt

European Patent Office

Office européen des brevets

(11) Veröffentlichungsnummer: **0 132 767**
**A2**

## (12) EUROPÄISCHE PATENTANMELDUNG

(21) Anmeldenummer: **84108434.6**

(22) Anmeldetag: **17.07.84**

(51) Int. Cl.⁴: **B 25 J 15/08**

(30) Priorität: **27.07.83 DE 3327060**

(43) Veröffentlichungstag der Anmeldung:
**13.02.85 Patentblatt 85/7**

(84) Benannte Vertragsstaaten:
**AT BE CH DE FR GB IT LI LU NL SE**

(71) Anmelder: **Göllner, Josef, jr.**
**Westfalenweg 27**
**D-4790 Paderborn-Schloss Neuhaus(DE)**

(72) Erfinder: **Göllner, Josef, jr.**
**Westfalenweg 27**
**D-4790 Paderborn-Schloss Neuhaus(DE)**

(74) Vertreter: **Patentanwälte TER MEER - MÜLLER -**
**STEINMEISTER**
**Artur-Ladebeck-Strasse 51**
**D-4800 Bielefeld 1(DE)**

(54) **Greifer mit zwei gegeneinander beweglichen Fingern.**

(57) Bei einem Greifer mit zwei gegeneinander beweglichen Fingern sind auf den einander zugewandten Greiferflächen der Finger jeweils mehrere einzeln relativ zueinander beweg- liche Greifglieder (18) vorgesehen, die mit Hilfe von gesonderten, jedoch untereinander verbundenen Hydraulikzylindern gegen einen zu greifenden Gegenstand andrückbar sind.

EP 0 132 767 A2

./...

Fig.1

## GREIFER MIT ZWEI GEGENEINANDER BEWEGLICHEN FINGERN

Die Erfindung betrifft einen Greifer mit zwei gegeneinander beweglichen Fingern.

Derartige Greifer werden beispielsweise für Industrieroboter zum Handhaben verschiedenartiger Gegenstände eingesetzt. Üblicherweise sind zwei zangenförmige arbeitende, in sich starre Finger vorgesehen, die den Gegenstand von entgegengesetzten Seiten her erfassen und einspannen. Damit der Gegenstand einerseits sicher zwischen den Fingern festgehalten und andererseits beim Einspannen nicht beschädigt wird, muß die Form der Finger zumeist in besonderer Weise der Form des Gegenstandes angepaßt sein. Ein bestimmter Greifer ist daher jeweils nur für eine eng begrenzte Klasse von Gegenständen einsetzbar. Zwar läßt sich dieser Nachteil dadurch mildern, daß die Greiferflächen der Finger mit elastischem Material gepolstert werden, jedoch führt auch dies bei Gegenständen mit stark abweichender Form nicht zu befriedigenden Ergebnissen.

Auch Greifer mit auswechselbaren Fingern unterschiedlicher Form oder mit Fingern, deren Form im Hinblick auf einen zu erfassenden Gegenstand veränderbar ist, bieten nicht die Möglichkeit, Gegenstände unterschiedlicher Form in beliebiger Reihenfolge ohne Unterbrechung des Betriebs zu erfassen.

Der Erfindung liegt die Aufgabe zugrunde, einen Greifer der eingangs genannten Art zu schaffen, der sich selbsttätig der jeweiligen Außenkontur des zu greifenden Gegenstandes anpaßt.

Diese Aufgabe wird erfindungsgemäß dadurch gelöst, daß wenigstens ein Finger des Greifers eine Anzahl von relativ zueinander beweglichen Greifgliedern umfaßt, die mit Hilfe von gesonderten, jedoch untereinander verbundenen Hydraulikzylindern gegen einen zu greifenden Gegenstand andrückbar sind.

Die gegeneinander beweglichen Greifglieder bieten einerseits die Möglichkeit einer Anpassung an die äußere Kontur des Gegenstandes, stehen jedoch andererseits alle aufgrund ihrer hydraulischen Verbindung unter dem selben Druck, so daß sich die Anpreßkräfte der Greifglieder über die gesamte Oberfläche des Gegenstandes gleichmäßig verteilen und Beschädigungen durch eine zu starke örtliche Krafteinwirkung vermieden werden.

Die hydraulische Verbindung kann entweder für die Greifglieder eines Fingers oder auch für die Greifglieder beider Finger bestehen, so daß sich ein vollständiger Druckausgleich ergibt.

In Abhängigkeit von dem Ausmaß der erforderlichen Öffnungs- und Schließbewegung der Finger können diese entweder gebildet werden durch zwei einander gegenüberliegende Gruppen von Greifgliedern, die auf einer gemeinsamen Halterung angeordnet sind, oder auch durch eine geteilte Halterung, die zwei gegeneinander bewegliche Backen bildet, auf denen jeweils eine Gruppe von Greifgliedern angeordnet ist.

Die Greifglieder können linear verschiebbare Lamellen oder Stifte oder auch schwenkbare Greiforgane beliebiger Form sein.

Das als Antrieb der Greifglieder dienende Hydrauliksystem umfaßt vorzugsweise eine Anzahl von Bohrungen in der Halterung oder den Backen, in denen Kolben gleiten, die in geeigneter Weise auf die Greifglieder einwirken. Diese können durch Federn in die Ruhestellung zurückgeführt werden. Die Greifbewegung der Greifglieder kann in Schließrichtung, ggf. aber auch in Spreizrichtung liegen, wenn etwa ein topfförmiger Gegenstand von innen her erfaßt werden soll. Bei einer besonders vielseitigen Ausführungsform wirken zwei Kolben auf jedes Greifglied in entgegengesetzter Bewegungsrichtung ein, so daß der Greifvorgang alternativ in Schließ- oder Öffnungsrichtung erfolgen kann.

Wenigstens ein Greifglied aus einer Gruppe von Greifgliedern kann mit einem entsprechenden Greifglied der zweiten Gruppe synchronisiert sein, so daß die Öffnungs- und Schließbewegung symmetrisch erfolgt. Auf diese Weise gelangt der erfaßte Gegenstand exakt in die Mittelposition, so daß etwa ein Absetzen in einer vorgegebenen Position möglich wird. Die übrigen Greifglieder können sich in der zuvor beschriebenen Weise frei der Form des Gegenstandes anpassen.

Im folgenden werden bevorzugte Ausführungsbeispiele der Erfindung anhand der beigefügten Zeichnung näher erläutert.

Fig. 1    ist ein schematischer Schnitt durch eine erste Ausführungsform eines erfindungsgemäßen Greifers;

Fig. 2    zeigt eine Greiferfläche in Draufsicht;

Fig. 3    ist eine Ansicht einer zweiten Ausführungsform eines erfindungsgemäßen Greifers;

Fig. 4        ist eine Ansicht von links in Figur 3;

Fig. 5        ist eine Darstellung einer dritten Ausführungsform eines erfindungsgemäßen Greifers mit doppelt wirkendem Antrieb der Greifglieder;

Fig. 6        ist eine Ansicht der Halterung der Greifglieder von links in Figur 5;

Fig. 7        ist eine Draufsicht zu Figur 6;

Fig. 8        zeigt eine Einzelheit zu Figur 5;

Fig. 9        veranschaulicht zwei in ihrer Bewegung synchronisierte Greifglieder.

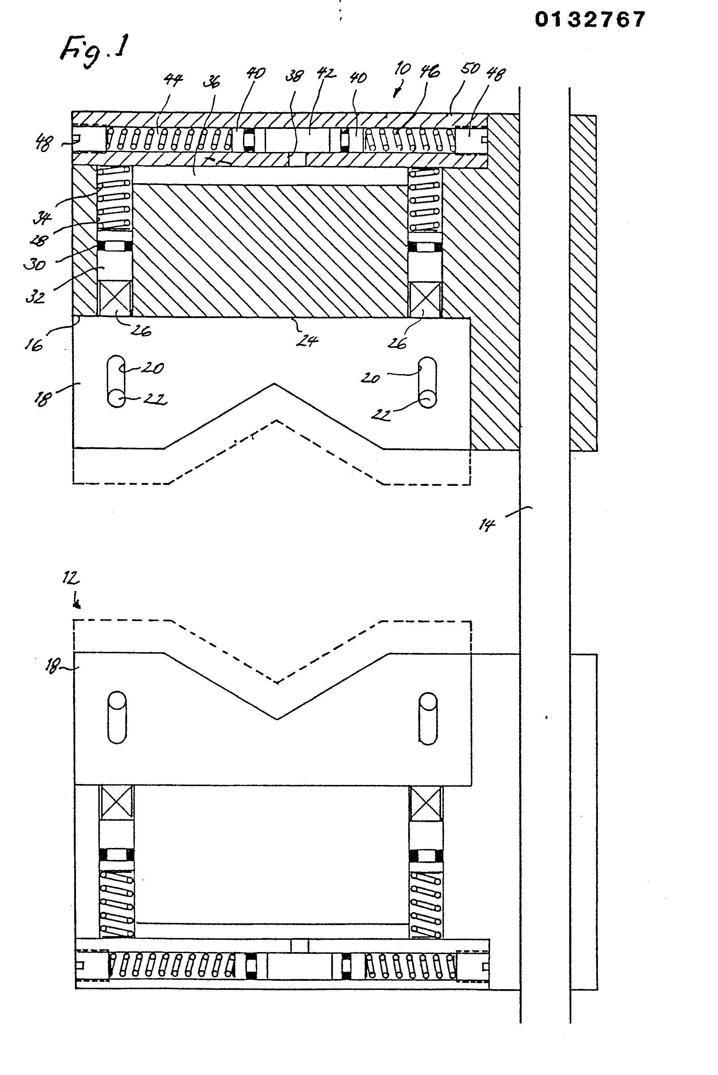

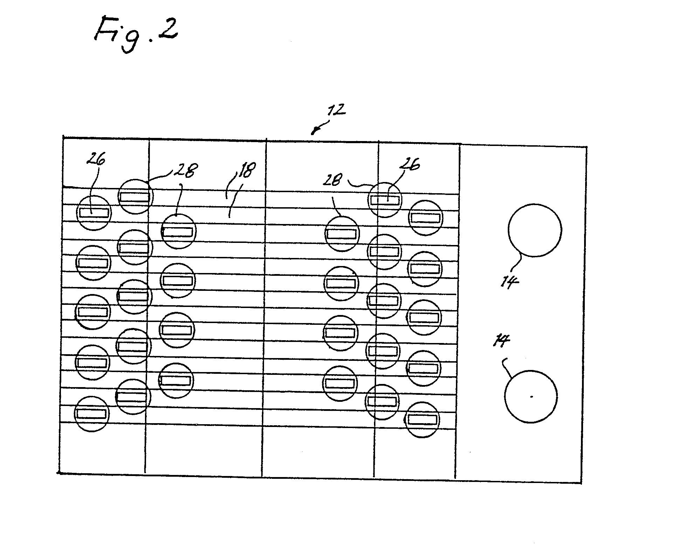

Ein in Figur 1 und 2 gezeigter Greifer umfaßt zwei identisch aufgebaute Backen 10,12, die mit Hilfe eines nicht gezeigten Antriebs entlang Führungsstangen 14 verschiebbar sind. Die Backen 10,12 weisen in ihren einander zugewandten Oberflächen je eine rechteckige Aussparung 16 auf, die einen Satz flach aneinander anliegender Lamellen 18 aufnimmt. Die Lamellen 18 sind jeweils an ihrer der anderen Backe zugewandten Kante V-förmig ausgenommen und bilden Greifglieder zu Erfassen eines nicht gezeigten, zwischen den beiden Lamellen-Sätzen befindlichen Gegenstandes.

Jede der Lamellen 18 weist zwei Langlöcher 20 auf, die jeweils eine an der Backe 10 bzw. 12 befestigte, quer durch sämtliche Lamellen laufende Stange 22 aufnehmen, und sind somit in bezug auf die Backe in einem begrenzten Bereich parallel zu den Führungsstangen 14 verschiebbar. In Fig. 1 sind die Lamellen in ihrer vollständig in die Backen zurückgezogenen Stellung dargestellt, während die vollständig ausgefahrene Stellung der Lamellen durch gestrichelte Linien angedeutet ist.

Jede der Lamellen weist an ihrer der Backe zugewandten inneren Kante 24 zwei in Verlängerung der Langlöcher 20 angeordnete Ansätze 26 auf, die in zylindrische Bohrungen 28 der Backe 10,12 hineinragen.

Jede der Bohrungen 28 nimmt einen mit einem Dichtring 30 versehenen Kolben 32 auf, der durch eine Feder 34 mit geringer Federkonstante in Richtung auf den Ansatz 26 vorgespannt wird. Die die Federn 34 aufnehmenden Abschnitte der Bohrungen 28 sind durch eine Kammer 36 miteinander verbunden. Die Kammer 36 steht über eine Stichbohrung 38 mit einer durch zwei Kolben 40 begrenzten Pufferkammer 42 in Verbindung. Die Kolben 40 werden durch zwei Federn 44,46 mit unterschiedlichen Federkonstanten in Richtung auf die Pufferkammer 42 vorgespannt. Die Federn 44,46 sind an den äußeren Enden jeweils an einem Stopfen 48 abgestützt. Die die Pufferkammer 42 bildende und die Kolben 40, die Federn 44,46 und die Stopfen 48 aufnehmende Bohrung ist in einem von dem Hauptkörper der Backe 10,12 lösbaren Block 50 ausgebildet, so daß die Federn 34,44,46 nach Entfernen des Blockes 50 und der Stopfen 48 ausgewechselt bzw. durch tieferes Einschrauben der Stopfen nachgespannt werden können.

In der montierten Stellung ist der Block 50 dichtend mit dem Hauptkörper der Backe verbunden, so daß die Pufferkammer 42, die Stichbohrung 38, die Kammer 36 und die Bohrungen 28 einen geschlossenen Hohlraum bilden. Dieser Hohlraum ist vollständig mit einem Arbeitsfluid, beispielsweise einer Bremsflüssigkeit ausgefüllt.

Wenn ein zwischen den Backen 10,12 befindlicher Gegenstand von dem Greifer erfaßt werden soll, so werden die Backen 10,12 aufeinander zu bewegt. Die Bewegung der Backen erfolgt beispielsweise mit einem Antrieb, dessen Antriebskraft auf einen Wert begrenzbar ist, bei dem keine Gefahr einer Beschädigung des Gegenstandes besteht. Die Lamellen 18 werden durch die Federn 34 in der in Fig. 1 gestrichelt dargestellten ausgefahrenen Stellung gehalten. Wenn die ersten Lamellen an dem Gegenstand anschlagen, so werden sie in die Aussparung 16 zurückgedrückt, und die diesen Lamellen zugeordneten Kolben 32 werden durch die Ansätze 26 weiter in die Bohrungen 28 hineingedrückt. Die Federn 34 setzen dieser Bewegung nur einen geringen Widerstand entgegen. Die durch die Einwärtsbewegung der Kolben bewirkte Volumenverringerung wird durch eine Kompression der ebenfalls leicht komprimierbaren Feder 44 unter Verschiebung eines der Kolben 40 ausgeglichen. Wenn bei der weiteren Bewegung der Backen 10,12 nach und nach auch die übrigen Lamellen 18 an dem Gegenstand anschlagen und je nach der Form des Gegenstandes mehr oder weniger weit in die Aussparung 16 zurückgedrückt werden, verringert sich das Gesamtvolumen der Bohrungen 28 so weit, daß die Feder 44 vollständig komprimiert wird. Bei der weiteren Bewegung der Backen 10,12 setzt die Kompression der stärkeren Feder 46 ein, und der Fluiddruck in den Hydrauliksystemen der beiden Backen - und damit der der Bewegung der Backen 10,12 entgegenwirkende Widerstand - nimmt spürbar zu. Wenn dieser Widerstand einen vorgegebenen Schwellenwert übersteigt, wird der Backen-Antrieb abgeschaltet, und der Gegenstand ist fest und sicher zwischen den Lamellen-Sätzen eingespannt.

Wie in Fig. 2 zu erkennen ist, weisen die Ansätze 26 der Lamellen einen rechteckigen Querschnitt auf, während die Bohrungen 28 einen kreisförmigen Querschnitt aufweisen. Die Bohrungen 28 sind in mehreren parallelen Reihen versetzt angeordnet. Auf diese Weise können die Lamellen 18 unmittelbar nebeneinander liegend angeordnet werden, obgleich ihre Breite geringer ist als der Durchmesser der Bohrungen 28. Die der selben Lamelle 18 zugeordneten Kolben 32 weisen übereinstimmende Wirkflächen auf, so daß die auf sie wirkenden hydraulischen Kräfte gleich groß sind und die Lamelle nicht verkantet. Die zu verschiedenen Lamellen gehörenden Kolben 32 können dagegen abweichend von dem gezeigten Ausführungsbeispiel auch unterschiedliche Wirkflächen aufweisen, so daß die Lamellen mit unterschiedlicher Anpreßkraft an den Gegenstand angedrückt werden.

Unterschiedliche Anpreßkräfte können auch dadurch erreicht werden, daß die einer Lamelle zugeordneten Bohrungen statt durch die Kammer 26 lediglich durch einen Kanal miteinander verbunden und von den übrigen Bohrungen 28 getrennt sind und daß für jedes Bohrungs-Paar eine eigene Puffer-Einheit entsprechend dem Block 50 mit Federn 44,46 unterschiedlicher Stärke vorgesehen ist.

Ein Puffer, wie er beispielsweise durch die Pufferkammer 42, die Kolben 40 und die Federn 44,46 gebildet wird, hat den Vorteil, daß der Gegenstand durch die Lamellen besonders weich und schonend erfaßt werden kann. Eine ähnliche Pufferungswirkung kann wahlweise auch durch in den Hydrauliksystemen eingeschlossene Luftblasen erzielt werden.

In einer abgewandelten Ausführungsform kann der Puffer auch vollständig fortgelassen werden, so daß das Hydrauliksystem lediglich die Kammer 26 und die Bohrungen 28 umfaßt. In diesem Fall muß allerdings das Volumen des Arbeitsfluids derart gewählt werden, daß die Lamellen 18 in der Ruhestellung eine mittlere Position zwischen den in Fig. 1 gezeigten Extremstellungen aufnehmen, damit die bei der Einwärtsbewegung eines Teils der Lamellen eintretende Volumenverringerung durch eine Auswärtsbewegung der anderen Lamellen ausgeglichen werden kann.

Gemäß einer weiteren Abwandlung des beschriebenen Ausführungsbeispiels ist das Volumen der Pufferkammer 42 mit Hilfe eines von außen betätigbaren Kolbens oder einer einschraubbaren Spindel veränderbar, so daß der Hydraulikdruck und damit die Spannkraft nach Bedarf variiert werden kann.

Die Backen müssen nicht parallelverschiebbar auf Führungsstangen angeordnet sein. Vielmehr können sie sich auch auf den Zungen einer Greifzange befinden, bei der es sich ggf. auch um eine Mehrgelenkzange mit Kniehebelmechanik handeln kann. Wesentlicher Gesichtspunkt für die Auswahl werden in der Regel die gegebenen Platzverhältnisse sein.

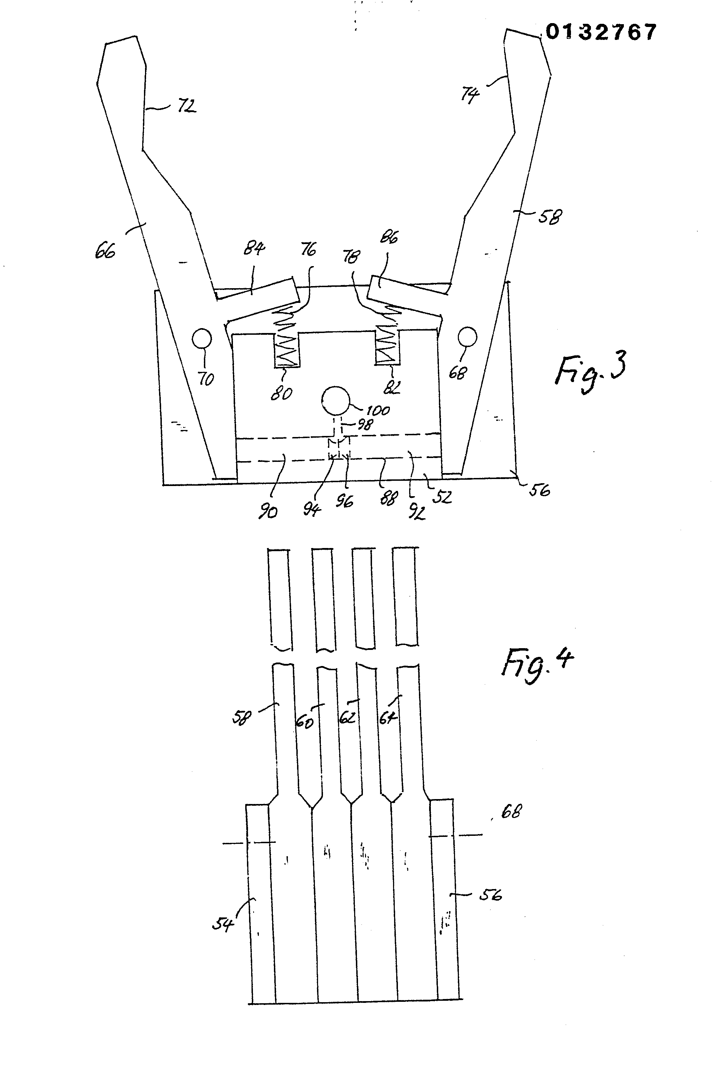

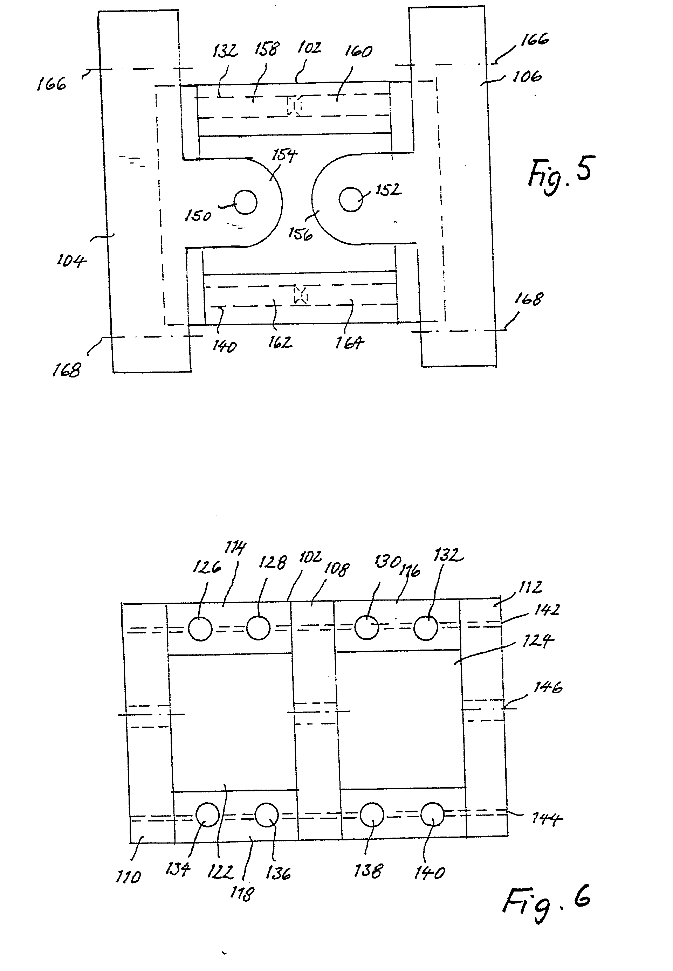

Während bei der zuvor beschriebenen Ausführungsform die Greifglieder auf zwei gegeneinander beweglichen Backen angeordnet und zudem ihrerseits in Bezug auf die Backen beweglich sind, soll anschließend anhand von Figur 3 und 4 eine Ausführungsform beschrieben werden, bei der zwei Gruppen von Greifgliedern gegeneinander und in Bezug auf eine gemeinsame Halterung beweglich sind. Eine derartige Halterung 52 weist gemäß Figur 3 und 4 die Form eines quaderförmigen Blockes auf, an dem an zwei gegenüberliegenden Seiten zwei Platten 54,56 befestigt sind, die in dem in Figur 3 gezeigten Beispiel den Block 52 nach rechts und links sowie nach oben überragen. In Figur 3 ist die dem Betrachter zugewandte Platte 54 zur Verdeutlichung fortgelassen worden. Zwischen den beiden Platten 54,56 sind auf beiden Seiten des Blockes 52 jeweils vier Greifglieder 58,60,62,64 bzw. 66 gelagert. Diese Lagerung erfolgt mit Hilfe von Achsen 68,70, die die Greifglieder schwenkbar aufnehmen und die Platten 54,56 miteinander verbinden. Aus Figur 4 geht hervor, daß die Greifglieder 58,60,62,64 in dem zwischen den Platten 54,56 liegenden unteren Bereich unmittelbar gegeneinander anliegen, im oberen Bereich dagegen schmaler ausgebildet sind und gegenseitige Abstände aufweisen.

Die Greifglieder 58,60,62,64,66 weisen insgesamt die Form schmaler, flacher Streifen auf. Sie sind im Bereich ihrer freien Enden auf den einander zugewandten Seiten mit Einkerbungen 72,74 zum Erfassen eines Gegenstandes versehen. Im unteren Bereich in Figur 3 weisen die Greifglieder eine nicht näher bezeichnete Abschrägung auf, die dazu führt, daß die Greifglieder bei einem Anliegen gegen den Block 52 eine leicht gespreizte Stellung einnehmen. In diese Stellung sind die Greifglieder vorgespannt durch Druckfedern 76,78, die sich einerseits in Sackbohrungen 80,82 auf der Oberseite des Blocks 52 und andererseits an Ansätzen 84,86 abstützen, die von den Greifgliedern nach innen, also in Richtung der jeweils anderen Greifglieder-Gruppe ausgehen.

Im unteren Bereich des Blocks 52 ist in Figur 3 der hydraulische Antrieb der Greifglieder gestrichelt angedeutet, der auch hier im wesentlichen dem in Verbindung mit der ersten Ausführungsform geschilderten Prinzip entspricht, konstruktiv jedoch im einzelnen anders ausgeführt ist. In dem Block 52 ist jeweils zwischen zwei einander gegenüberliegenden Greifgliedern, im Beispiel der Figur 3 zwischen den Greifgliedern 58 und 66, eine durchgehende, als Zylinder dienende Bohrung 88 vorgesehen, in der zwei Kolben 90,92 liegen, deren Gesamtlänge derjenigen der Bohrung entspricht. Die Kolben weisen an den gegeneinander anliegenden Ende eine kegelstumpfförmige Abschrägung 94,96 auf. Im Bereich der Abschrägungen 94,96 entsteht somit in der Bohrung 88 eine ringförmige, im Querschnitt dreieckige, nicht bezeichnete Kammer, in die ein Stichkanal 98 einmündet, der von einem gemeinsamen Hauptkanal 100 ausgeht, durch den alle Bohrungen der Greifglieder-Paare mit Hydraulikfluid versorgt werden.

Wenn durch den Hauptkanal 100 und die einzelnen Stichkanäle 98 Hydraulikfluid in die Bohrungen 88 gelangt, werden die Kolben 90,92 auseinandergetrieben, so daß die Greifglieder 58,66 an ihren freien Enden zusammengedrückt werden, wie es bereits für das erste Ausführungsbeispiel beschrieben wurde. Wenn ein Greifglied oder Greifglieder-Paar den zu erfassenden Gegenstand berührt, bleibt es stehen, während das Hydraulikfluid in diejenigen Bohrungen 88 ausweicht, deren zugehörige Greifglieder den Gegenstand noch nicht erfaßt haben.

Während bei den zuvor beschriebenen Ausführungsformen die Greifglieder beim Erfassen eines Gegenstandes zusammengeführt werden, kann der Greifvorgang auch in einer Spreizbewegung bestehen, bei der beispielsweise in das Innere eines topfförmigen Gegenstandes hineingegriffen wird. Darüber hinaus kommen Ausführungsformen in Betracht, die doppelt wirkend ausgebildet sind und beide Greifbewegungen ermöglichen, wie anschließend am Beispiel von Figur 5 bis 7 erläutert werden soll.

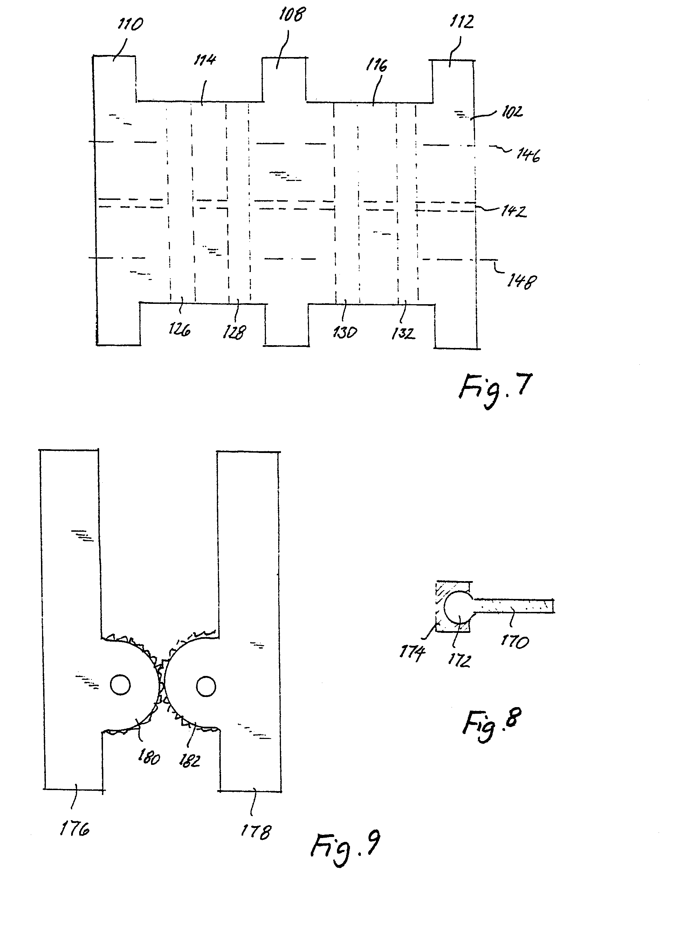

Figur 5 zeigt wiederum einen Block 102, an dem in diesem Falle vier Paare von gegenüberliegenden Greifgliedern gelagert sind, von denen in Figur 5 nur die Greifglieder 104,106 gezeigt sind. Zunächst soll anhand von Figur 6 und 7 die Form des Blockes 102 erläutert werden, der in Figur 6 in einer Ansicht von links in Figur 5 und in Figur 7 in einer zugehörigen Draufsicht gezeigt ist. Der Block 102 umfaßt eine mittlere und zwei äußere, rechteckige Trägerplatten 108,110,112, zwischen deren oberem und unterem Rand Zylinderplatten 114,116,118,120 befestigt sind, die gemäß Figur 6 zusammen mit den Trägerplatten zwei im wesentlichen quaderförmige Ausnehmungen 122,124 bilden. In den Zylinderplatten 114,116,118,120 befinden sich jeweils zwei senkrecht zur Zeichenebene in Figur 6 verlaufende, als Zylinder des erfindungsgemäßen Hydraulikantriebes dienende Bohrungen 126,128,130,132,134,136,138, 140. Alle Bohrungen sind untereinander mit einem nicht gezeigten Zufuhrsystem für Hydraulikfluid mit Hilfe von quer zu den Bohrungen verlaufenden Zufuhrbohrungen 142,144 verbunden. Die Trägerplatte 112 ist in Figur 5 fortgelassen.

Schließlich befinden sich in mittlerer Höhe der Trägerplatten 108,110,112, zwei miteinander fluchtende Bohrungen 146,148, die zur Aufnahme von Achsen als Lagerung für die Greifglieder dienen. Diese Achsen 150,152 sind in Figur 5 gezeigt. Die Greifglieder 104,106 weisen auf den einander zugewandten Seiten im wesentlichen halbkreisförmige Ansätze 154,156, die von den Achsen 150,152 durchlaufen werden.

In Figur 5 sind im übrigen die bereits erwähnten Bohrungen 126,128,130,132,134,136,138,140 gestrichelt angedeutet, von denen in Figur 5 lediglich die Bohrungen 132,140 sichtbar sind. In den Bohrungen befinden sich wiederum zylindrische Kolben 158,160,162,164 mit kegelstumpfförmig abgeschrägten, nicht näher bezeichneten inneren Enden, zwischen denen die in Figur 6 dargestellten Zufuhrbohrungen 142,144 für das Hydraulikfluid münden. Die Kolben können somit aus den zugehörigen Bohrungen herausgedrückt werden und die Greifglieder 104,106 in Uhrzeigerrichtung oder gegen Uhrzeigerrichtung schwenken, je nach dem, ob die unteren oder oberen Bohrungen des Hydrauliksystems in Figur 5 mit Hydraulikfluid versorgt werden.

Die in Figur 5 dargestellten Greifglieder 104,106 dienen lediglich als Träger für die nicht gezeigten Greiffinger oder sonstige Greifmechanismen, die beim Greifen zusammengeführt oder auch gespreizt werden können. Zur Befestigung derartiger Mechanismen sind Bohrungen 166,168 angedeutet.

Die Kolben 158,160,162,164 können unmittelbar auf die Innenflächen der Greifglieder 104,106 einwirken, jedoch kann dies angesichts der von den Greifgliedern durchgeführten Schwenkbewegung zu exzentrischen Belastungen der Kolben und damit zu Verschleißerscheinungen führen. In die Greifglieder 104,106 können daher Schrauben 170 gemäß Figur 8 eingedreht werden, die einen kugelförmigen Kopf 172 und eine auf diesen aufgesetzte, bewegliche Kappe 174 aufweisen, die sich jeweils in ihrer Position der Stirnfläche des Kolbens anpaßt.

Figur 9 zeigt am Beispiel eines Paares von Greifgliedern 176,178 eine Möglichkeit zur Ergänzung eines erfindungsgemäßen Greifers, die grundsätzlich für alle beschriebenen Ausführungsformen anwendbar ist. In diesem Falle weisen die Greifglieder 176,178, die den Greifgliedern 104,106 gemäß Figur 5 entsprechen, auf den einander zugewandten, halbkreisförmigen Ansätzen 180,182 miteinander kämmende Verzahnungen auf, die zu einer Synchronisierung der Bewegung der Greifglieder führen. Ein derartiges Greifgliederpaar kann eingesetzt werden, wenn ein Gegenstand beim Erfassen in eine vorgegebene, zentrierte Position gebracht werden soll. Diese Synchronisation sollte jedoch nur für einzelne Greifgliederpaare, etwa die beiden äußeren Greifgliederpaare angewendet werden, so daß die übrigen Greifgliederpaare frei beweglich bleiben und sich der Form des ergriffenen Gegenstandes anpassen können.

PATENTANSPRÜCHE

1. Greifer mit zwei gegeneinander beweglichen Fingern, dadurch g e k e n n z e i c h n e t, daß wenigstens einer der Finger eine Anzahl von relativ zueinander beweglichen Greifgliedern (18;58,60,62,64,66;104,106) umfaßt, die mit Hilfe von gesonderten, jedoch untereinander verbundenen Hydraulikzylindern (28,32;88,90,92;132,140, 158,160,162,164) gegen einen zu greifenden Gegenstand andrückbar sind.

2. Greifer nach Anspruch 1, dadurch g e k e n n - z e i c h n e t, daß beide Finger eine Anzahl von Greifgliedern (18,58,60,62,64,66;104,106) aufweisen und daß die Hydraulikzylinder beider Finger untereinander verbunden sind.

3. Greifer nach Anspruch 1 oder 2, dadurch g e k e n n - z e i c h n e t, daß die Finger des Greifers durch zwei zur Grobeinstellung gegeneinander bewegliche Backen (10, 12) gebildet werden, auf denen jeweils eine Anzahl von Greifgliedern (18) beweglich angeordnet ist.

4. Greifer nach Anspruch 1 oder 2, dadurch g e k e n n - z e i c h n e t, daß die Finger des Greifers durch zwei auf einer gemeinsamen Halterung (52,54,56;102) beweglich angeordnete Gruppen von Greifgliedern (58,60,62,64,66; 104,106) gebildet werden.

5. Greifer nach Anspruch 3 oder 4, dadurch g e k e n n - z e i c h n e t, daß in den Backen (10,12) bzw. der Halterung (52,54,56;102) untereinander und mit einer gemeinsamen Hydraulikfluidquelle verbundene Bohrungen (28;88; 126,128,130,132,134,136,138,140) vorgesehen sind, in denen Kolben (32;90,92;158,160,162,164) zur Bewegung der Greifglieder verschiebbar geführt sind.

6. Greifer nach einem der vorhergehenden Ansprüche, dadurch g e k e n n z e i c h n e t, daß die Greifglieder (18) als linear verschiebbare, parallel nebeneinander liegende Lamellen ausgebildet sind.

7. Greifer nach einem der Ansprüche 1 bis 5, dadurch g e k e n n z e i c h n e t, daß die Greifglieder (58, 60,62,64,66;104,106) schwenkbar in Bezug auf die Halterung (52,54,56;102) bzw. die Backen gelagert sind.

8. Greifer nach einem der vorhergehenden Ansprüche, dadurch g e k e n n z e i c h n e t, daß in dem die Hydraulikzylinder umfassenden Hydrauliksystem wenigstens eine durch einen elastisch vorgespannten Kolben (40) begrenzte Pufferkammer (42) vorgesehen ist.

9. Greifer nach einem der vorhergehenden Ansprüche, dadurch g e k e n n z e i c h n e t, daß die Greifglieder (18;58,60,62,64,66) durch Federn (34;76,78) in die Ruhestellung vorgespannt sind.

10. Greifer nach einem der Ansprüche 1 bis 8, dadurch g e k e n n z e i c h n e t, daß jedem Greifglied (104, 106) zwei in entgegengesetzte Bewegungsrichtung wirkende, hydraulisch betätigte Kolben (158,160,162,164) zugeordnet sind.

11. Greifer nach einem der vorhergehenden Ansprüche, dadurch g e k e n n z e i c h n e t, daß wenigstens ein korrespondierendes Greifglieder-Paar (176, 178) zweier Greifglieder-Gruppen in seiner Greifbewegung synchronisiert ist.

Fig.1

0132767

0132767

Fig.2

0132767

Fig. 3

Fig. 4

0132767

Fig.5

Fig.6

0132767

Fig.7

Fig.8

Fig.9